# EUROPÄISCHE PATENTSCHRIFT

(11) **EP 4 281 943 B1**
(45) Veröffentlichungstag und Bekanntmachung des Hinweises auf die Patenterteilung: **28.01.2026**
(21) Anmeldenummer: 21830401.2
(22) Anmeldetag: 03.12.2021
(51) Int. Cl.: G06V 20/20, G06V 20/56, G09B 9/042

(54) **VERFAHREN UND TRAININGSSYSTEM ZUM TRAINIEREN EINES KAMERABASIERTEN STEUERUNGSSYSTEMS**
METHOD AND TRAINING SYSTEM FOR TRAINING A CAMERA-BASED CONTROL SYSTEM
PROCÉDÉ ET SYSTÈME D'ENTRAÎNEMENT POUR L'ENTRAÎNEMENT D'UN SYSTÈME DE COMMANDE BASÉ SUR UNE CAMÉRA

(30) Priorität: 19.01.2021 DE 102021200452
(43) Veröffentlichungstag der Anmeldung: 29.11.2023
(73) Patentinhaber: Stellantis Auto SAS, 78300 Poissy (FR)
(72) Erfinder: EBERLE, Ulrich, 65428 Rüsselsheim am Main (DE); THIEM, Christoph, 65428 Rüsselsheim am Main (DE)
(74) Vertreter: ESIP
(86) Internationale Anmeldenummer: PCT/EP2021/084162
(87) Internationale Veröffentlichungsnummer: WO 2022/156947

(56) Entgegenhaltungen:
- DE-A1- 102006 044 086
- DE-A1- 102018 003 130
- DE-A1- 102019 203 712
- DE-A1- 102019 206 908

## Beschreibung

### Technisches Gebiet

Die Erfindung betrifft ein Verfahren und ein Trainingssystem zum Trainieren eines kamerabasierten Steuerungssystems für ein Kraftfahrzeug.

### Stand der Technik

Das Trainieren von Kl-Algorithmen beispielsweise für automatisierte Fahrfunktionen ist im öffentlichen Straßenraum auf Grund der Eigengefährdung und der möglichen Gefährdung anderer Verkehrsteilnehmer schwierig bis unmöglich. Auf einem abgesperrten Test- bzw. Prüfgelände können wiederum komplexe Verkehrsszenarien nicht ausreichend getestet werden, da sich diese Szenarien zum Beispiel aufgrund eines Mangels an Fahrzeugen für den Umgebungsverkehr oder aufgrund eines Mangels an Dummys für Fußgänger nicht hinreichend realitätsgetreu nachbilden lassen. Reine Simulationsmethoden haben beispielsweise aufgrund fehlender fahrphysikalischer Einflüsse keinen ausreichenden Realitätsgrad. Daher haben sich hybride Ansätze zwischen reiner Simulation und realen Tests für das Trainieren entsprechender Systeme als hilfreich erwiesen.

Aus der DE 10 2019 206 908 A1 ein Verfahren zum Trainieren eines Kl-basierten Steuergerätes eines Kraftfahrzeugs bekannt, dass in einer hybriden Umgebung erfolgt. Die hybride Umgebung umfasst eine an eine Verkehrssimulation gekoppelte realen Umgebung.

Ferner beschreibt die DE 10 2019 203 712 A1 ein Verfahren zum Trainieren wenigstens eines Algorithmus für ein Steuergerät eines Kraftfahrzeugs. Das Training erfolgt in einer realen Umgebung mit weiteren Kraftfahrzeugen, die von einer Simulationsumgebung ferngesteuert werden. Die weiteren Kraftfahrzeuge interagieren mit virtuellen Objekten der Simulationsumgebung.

Aus der DE 10 2006 044 086 A1 ist ein System und Verfahren zur virtuellen Simulation von Verkehrssituationen mit einem modellierten Referenzfahrzeug bekannt.

### Kurzbeschreibung der Erfindung

Vor diesem Hintergrund liegt der Erfindung die Aufgabe zugrunde, ein Verfahren sowie ein Trainingssystem bereitzustellen, die insbesondere zum Trainieren von kamerabasierten Steuerungssystemen eines Kraftfahrzeugs geeignet sind.

Vorgeschlagen wird dementsprechend ein Verfahren gemäß dem Hauptanspruch sowie ein Trainingssystem und ein Computerprogramm gemäß den Nebenansprüchen. Weiterführende Ausgestaltungen sind Gegenstand der jeweils abhängigen Ansprüche.

Gemäß einem ersten Aspekt der Erfindung wird die Aufgabe gelöst durch ein Verfahren zum Trainieren eines kamerabasierten Steuerungssystems eines Kraftfahrzeugs. Das Steuerungssystem umfasst einen Kl-Algorithmus, der eine Bilderkennung zum Erkennen und Klassifizieren von Objekten im Sichtfeld der Kamera bereitstellt. Das Kraftfahrzeug ist dabei mit einer Verkehrssimulation gekoppelt und wird auf einem Gelände gefahren, so dass das Kraftfahrzeug in der Verkehrssimulation zeitlich und örtlich positioniert widergespiegelt wird.

Das Gelände kann ein geeignetes Prüfgelände oder eine kontrollierte, d. h. zum Beispiel eine abgesperrte öffentliche Umgebung mit einem Straßenverlauf sein. Ein geeignetes Prüfgelände kann beispielsweise auch eine Freifläche eines Testgeländes umfassen. Unter einer Verkehrssimulation kann eine modellbasierte Nachbildung und Analyse von verschiedenen Verkehrsszenarien verstanden werden, die durch Simulationsumgebung, d. h. durch ein System aus einer computerbasierten Hardware und einer Software bereitgestellt werden kann. Zur Nachbildung einer für ein Verkehrsszenario relevanten örtlichen Umgebung können entsprechende Kartendaten in die Simulation eingespielt werden.

Basierend auf einer jeweiligen widergespiegelten Position des Kraftfahrzeugs werden durch die Verkehrssimulation Trainingsszenarien mit virtuellen Objekten erzeugt, wobei für die simulierten virtuellen Objekte ferner jeweils eine bildliche Darstellung erzeugt wird. Die erzeugten bildlichen Darstellungen werden mittels wenigstens einem Projektionssystem in ein Sichtfeld einer dem kamerabasierten Steuerungssystem des Kraftfahrzeuges zugeordneten Kamera projiziert, so dass der Kamera Bilder der virtuellen Objekte aus der Verkehrssimulation zurückgeführt werden.

Die simulierten virtuellen Objekte können andere Verkehrsteilnehmer wie Fußgänger und andere Kraftfahrzeuge oder im wesentlichen statische Objekte in einem Verkehrsszenario darstellen, wobei die statischen Objekte insbesondere Verkehrszeichen oder Verkehrsampeln sein können.

Eine Reaktion des Steuerungssystems auf ein jeweiliges Trainingsszenario wird bewertet. Ferner wird ein Bewertungsergebnis vom Steuerungssystem verarbeitet, das aus der Bewertung der Reaktion des Steuerungssystems gewonnen worden ist.

Eine Idee hinter dem erfindungsgemäßen Verfahren ist, dass der Kamera eines zu trainierenden kamerabasierten Steuerungssystems realistische Bilder der virtuellen Objekte zurückgeführt werden, die in der Verkehrssimulation generiert worden sind. Somit kann insbesondere auch eine KI-basierte Perzeption eines kamerabasierten Steuerungssystems für ein Kraftfahrzeug trainiert werden. Zu einem Training muss lediglich die Reaktion des Steuerungssystems auf das Trainingsszenario erfasst und bewertet werden. Mit einem auf das zu trainierende Steuerungssystem rückgekoppelten Bewertungsergebnis wird der Kl-Algorithmus mittels bestärkenden Lernens (engl. reinforcement learning) trainiert.

Das Bewertungsergebnis kann eine positive oder negative Belohnung darstellen, anhand der ein zu trainierender Kl-Algorithmus innerhalb des Steuerungssystems seine Strategie erlernt.

Gemäß einer Weiterbildung des Verfahrens beruht das Bewertungsergebnis auf einer Metrik für ein jeweiliges Trainingsszenario, die von der Verkehrssimulation bereitgestellt wird. Die Reaktion des Steuerungssystems auf ein jeweiliges Trainingsszenario kann somit durch die Verkehrssimulation bewertet werden, wobei ein einsprechendes Bewertungsergebnis an das Steuerungssystem zwecks Verarbeitung übermittelt werden kann.

. Mit der Bilderkennung sollen insbesondere solche Objektklassen erkannt werden können, die den simulierten virtuellen Objekten aus der Verkehrssimulation entsprechen, d.h. Fußgänger, andere bewegliche Verkehrsteilnehmen sowie Verkehrs- und Lichtzeichen sowie andere statische Objekte.

Ein kamerabasiertes Steuerungssystem im Sinne der vorliegenden Erfindung kann beispielsweise ein Verkehrszeichenassistent sein, der Verkehrszeichen z.B. am Fahrbahnrand zur anzeigebasierten Wiedergabe an einen Fahrer erkennen kann. Ein Bewertungsergebnis, mit dem die Reaktion eines derartigen Steuerungssystems auf ein Trainingsszenario bewertet wird, kann somit ein Wert sein, der angibt, ob ein während des Trainingsverfahrens projiziertes Verkehrszeichen in dem jeweiligen Trainingsszenario richtig erkannt wurde oder nicht.

Nach einer alternativen oder ergänzenden Weiterbildung kann dem KI-Algorithmus oder einem weiteren Kl-Algorithmus eine Fahrstrategie für das Kraftfahrzeug bereitgestellt werden. Als eine Fahrstrategie kann ein Steuerungseingriff in die Fahrzeuglängsregelung und/oder in die Fahrzeugquerregelung verstanden werden. Auch eine Trajektorienplanung für ein bevorstehendes autonomes oder teilautonomes Fahrmanöver kann eine Fahrstrategie sein.

Die Reaktion des Steuerungssystems auf ein jeweiliges Trainingsszenario kann dann auf Grundlage eines ausgeführten Fahrmanövers oder auf Basis einer geplanten Trajektorie bzw. eines geplanten Längs- oder Querregelungseingriffes bewertet werden.

Das kamerabasierte Steuerungssystem kann beispielsweise auch Ende-zu-Ende KI-Modul besitzen, das von einer kamerabasierten Objekterkennung bis zu einer Ansteuerung der Fahrzeugaktuatoren alle relevanten Funktionen monolithisch bereitstellt.

Nach einer Weiterbildung der Erfindung können die bildlichen Darstellungen der virtuellen Objekte mittels wenigstens einem Videoprojektor auf wenigstens eine Projektionsfläche auf dem befahrenen Gelände projiziert werden.

Die Projektoren können mobil z.B. mittels Drohnen aus der Luft oder auf fahrbar auf dem Boden die bildlichen Darstellungen der simulierten virtuellen Objekte (z.B. andere Verkehrsteilnehmer, Verkehrsschilder, etc.) in das Sichtfeld der Kamera des Kraftfahrzeuges projizieren. Als Projektionsfläche kann beispielweise eine Fahrbahn oder eine Geländeoberfläche des befahrenen Geländes dienen. Durch eine geeignet bildliche Perspektive können auch Verkehrsschilder perspektivisch so verzerrt auf eine Geländeoberfläche projiziert werden, dass diese von der Kamera als am Fahrbahnrand stehende Schilder optisch wahrgenommen werden können.

Alternativ können auch feststehende Projektoren auf dem Gelände aufgestellt werden, wobei die virtuellen Objekte auf leinwandartige Projektionsflächen projiziert werden können.

Nach einer alternativen Weiterbildung der Erfindung können die bildlichen Darstellungen der virtuellen Objekte einer mittels einer Projektionseinrichtung auf einen Combiner einer Kameravorsatzoptik projiziert werden.

Die Kameravorsatzoptik kann dazu vor der Kamera, die dem zu trainierenden Steuerungssystem zugeordnet ist, angeordnet und befestigt werden. Die Kameravorsatzoptik ermöglicht mit dem Combiner - beispielsweise mit einem Head-up-Display vergleichbar - eine Kombination eines realen Bildes des Kamerasichtfeldes mit den projizierten bildlichen Darstellungen der simulierten virtuellen Objekte.

Nach einem zweiten Aspekt der Erfindung wird die Aufgabe gelöst durch ein Trainingssystem zum Trainieren eines kamerabasierten Steuerungssystems eines Kraftfahrzeugs. Das Trainingssystem umfasst ein Kraftfahrzeug mit einem zu trainierenden kamerabasierten Steuerungssystem und mit einer zugeordneten Kamera, eine Simulationsumgebung zum Bereitstellen einer Verkehrssimulation sowie wenigstens ein Projektionssystem.

Das Steuerungssystem umfasst einen KI-Algorithmus, der eine Bilderkennung zum Erkennen und Klassifizieren von Objekten einen im Sichtfeld der Kamera bereitgestellt. Der Kl-Algorithmus umfasst also einen Bilderkennungsalgorithmus.

Die Simulationsumgebung steht mit dem zu trainierenden kamerabasierten Steuerungssystem sowie mit dem Projektionssystem zwecks Datenübermittlung in Verbindung, so dass sich eine zeitliche und örtliche Position des auf einem Gelände gefahrenen Kraftfahrzeugs in der Verkehrssimulation widergespiegelt.

Die Verkehrssimulation ist ausgebildet, basierend auf einer jeweiligen widergespiegelten Position des Kraftfahrzeugs Trainingsszenarien mit virtuellen Objekten zu erzeugen. Die Verkehrssimulation ist ferner ausgebildet, für die simulierten virtuellen Objekte jeweils eine bildliche Darstellung zu erzeugen.

Das Projektionssystem kann die erzeugten bildlichen Darstellungen aus der Verkehrssimulation von der Simulationsumgebung empfangen. Ferner ist das Projektionssystem ausgebildet, die erzeugten bildlichen Darstellungen in ein Sichtfeld der Kamera zu projizieren.

Das zu trainierende Steuerungssystem ist ausgebildet, ein Bewertungsergebnis zu verarbeiten, das eine Reaktion des Steuerungssystems auf ein jeweiliges Trainingsszenario bewertet.

Eine Datenübermittlung zwischen der Simulationsumgebung und dem zu trainierenden Steuerungssystem bzw. dem Projektor kann zum Beispiel mittels Funkverbindung erfolgen.

Nach einer Weiterbildung des zweiten Aspektes kann die Verkehrssimulation ausgebildet sein, die Reaktion des zu trainierenden Steuerungssystems auf ein jeweiliges Trainingsszenario zu bewerten. Dafür kann die Verkehrssimulation einer Metrik für ein jeweiliges Trainingsszenario bereitstellen, auf der die Bewertung beruht bzw. aus der sich das Bewertungsergebnis ergibt.

Die Simulationsumgebung kann das Bewertungsergebnis der Verkehrssimulation an das zu trainierende Steuergerät übermitteln.

Gemäß einer Weiterbildung kann der Kl-Algorithmus oder ein weiterer Kl-Algorithmus des Steuerungssystems einen Fahrstrategiealgorithmus für das Kraftfahrzeug umfassen.

Gemäß einer Weiterbildung des zweiten Aspektes, kann das Projektionssystem einen Videoprojektor umfassen, der ausgebildet ist, die bildlichen Darstellungen der virtuellen Objekte auf wenigstens eine Projektionsfläche auf einem befahrenen Gelände zu projizieren.

Alternativ kann das Projektionssystem eine Projektionseinrichtung sowie eine Kameravorsatzoptik mit einem Combiner umfassen und dazu ausgebildet sein, die bildlichen Darstellungen der virtuellen Objekte den Combiner zu projizieren, wobei die Kameravorsatzoptik mit dem Combiner vor der Kamera des Kraftfahrzeugs angeordnet ist.

Nach einem weiteren Aspekt der Erfindung wird die Aufgabe gelöst durch ein Computerprogramm, das, wenn es auf einer Recheneinheit innerhalb einer zu trainierenden kamerabasierten Steuerungssystems und/oder innerhalb einer Simulationsumgebung für eine Verkehrssimulation ausgeführt wird, die jeweilige Recheneinheit anleitet, das Verfahren auszuführen.

### Kurze Beschreibung der Zeichnungsfiguren

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktions-gleiche Teile sind mit gleichen Bezugszeichen versehen. Dabei zeigen:
Figur 1 zeigt ein erstes Trainingssystem zum Trainieren eines kamerabasierten Steuerungssystems eines Kraftfahrzeugs,
Figur 2 zeigt ein zweites Trainingssystem zum Trainieren eines kamerabasierten Steuerungssystems eines Kraftfahrzeugs;
Figur 3 skizziert eine Simulationsumgebung;
Figur 4 veranschaulicht einen Ablauf des erfindungsgemäßen Verfahrens zum Trainieren eines kamerabasierten Steuerungssystems.

### Beschreibung der Ausführungsarten

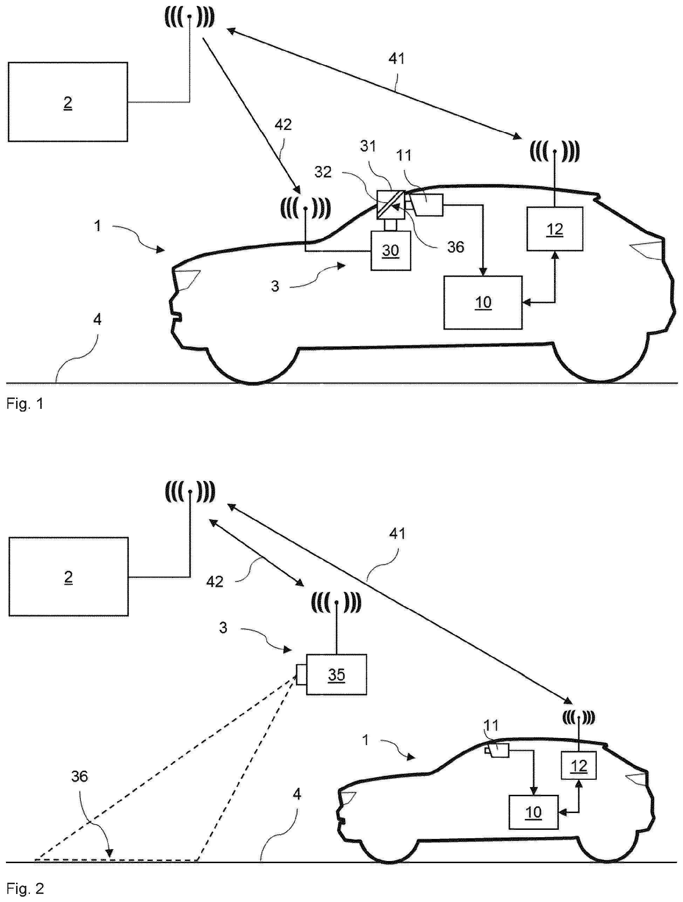

Die Figur 1 zeigt ein erstes Ausführungsbeispiel für ein erfindungsgemäßes Trainingssystem zum Trainieren eines kamerabasierten Steuerungssystems 10 eines Kraftfahrzeugs 1. In dem Kraftfahrzeug 1 ist ein zu trainierendes Steuerungssystem 10 mit einer zugeordneten Kamera 11 installiert. Die Kamera 11 kann in einem oberen Bereich hinter einer Windschutzscheibe des Kraftfahrzeug 1 angeordnet sein und dient zur optischen Erfassung eines Fahrzeugumfeldes in Fahrtrichtung des Kraftfahrzeuges 1. Das Steuerungssystem 10 besitzt ein Mikroprozessorsystem mit einer eingebetteten Software und stellt zumindest eine Objekterkennung bereit, die zur Erkennung und Klassifizierung von Objekten dienen soll, die von der Kamera 11 erfasst worden sind.

Die Objekterkennung basiert auf Ansätzen des maschinellen Lernens, weshalb ein entsprechender Kl-Algorithmus in einer Objekterkennungssoftware des Steuerungssystem 10 implementiert ist. In einer einfachen Ausführungsform beinhaltet das Steuerungssystem 10 im Wesentlichen nur eine KI basierte Objekterkennung, so dass lediglich eine Liste mit erkannten Objekten mit Position und Lage erzeugt wird, die beispielsweise auf einen Fahrzeug-BUS ausgegeben werden kann. In einer aufwendigen Ausgestaltung können weitere Algorithmen in dem Steuerungssystem 10 eingebettet sein, mit denen zum Beispiel komplexe Fahrerassistenzfunktionen bereitgestellt werden. Diese weitern Algorithmen können wiederum Kl-Algorithmen sein oder solche umfassen.

Außerhalb des Kraftfahrzeugs 1 befindet sich eine Simulationsumgebung 2, die im Wesentlichen ein leistungsfähiges Computersystem und eine Simulationssoftware umfasst, mit denen eine Verkehrssimulation 20 durchgeführt bzw. bereitgesellt werden kann.

In oder am Kraftfahrzeug 1 ist ferner ein Projektionssystem 3 angeordnet, das eine Projektionseinrichtung 30, d.h. eine bildgebende Einheit und eine Kameravorsatzoptik 31 umfasst. Innerhalb der Kameravorsatzoptik 31 ist ein Combiner 32 angeordnet, auf den ein Bild 36 aus der Projektionseinrichtung 30 projiziert werden kann. Der Combiner kann ein Abbild der äußeren Umgebung mit einem von der Projektionseinrichtung 30 projizierten Bild 36 zu einem kombinierten Bild kombinieren. Das Projektionssystem 3 kann wahlweise sowohl hinter, als auch vor einer Windschutzscheibe in oder außerhalb der Kraftfahrzeuges 1 befestigt angeordnet sein bzw. werden.

Die Simulationsumgebung 2 besitz eine Funkschnittstelle, mit der eine erste Funkverbindung 41 zu einer Kommunikationseinrichtung 12 des Kraftfahrzeuges 1 und eine zweite Funkverbindung 42 zu dem Projektionssystem 3 bereitgestellt wird.

Für ein Training des kamerabasierten Steuerungssystems 10 kann das Kraftfahrzeug 1 auf einem geeigneten Gelände 4, z.B. auf einem Prüfgelände oder innerhalb einer kontrollierten öffentliche Umgebung, gefahren werden. Dabei kann mittels Satellitennavigation (z.B. D-GPS) fortwährend die genaue Ortsposition des Kraftfahrzeugs 1 auf dem jeweiligen Gelände 4 ermittelt und mittels der Kommunikationseinrichtung 12 an die Simulationsumgebung 2 übermittelt werden.

Mittels der zweiten Funkverbindung 42 können Daten bezüglich virtueller Objekte aus einer Verkehrssimulation 20 von der Simulationsumgebung 2 zu dem Projektionssystem 3 übertragen werden, so dass eine bildliche Darstellung dieser virtuellen Objekte als Bild 36 in das Sichtfeld der Kamera 11 des Kraftfahrzeuges 1 projiziert werden kann.

In der Figur 2 ist ein alternativer Aufbau eines erfindungsgemäßen Trainingssystems dargestellt. Die Simulationsumgebung 20 ist bespielgemäß über die zweite Funkverbindung 42 mit einem Videoprojektor 35 gekoppelt. Mit einem derartigen Projektionssystem 3 können bildliche Darstellungen der virtuellen Objekte aus der Verkehrssimulation 20 beispielsweise auf eine Oberfläche des Geländes 4 projiziert werden. Der Videoprojektor 35 kann stationär auf dem Gelände 4 aufgestellt sein oder beispielsweise von einer Drohne getragen auf bzw. über dem Gelände 4 bewegt werden. Ein Bild 36 kann unter Kompensation der Perspektive auf die Oberfläche des Geländes 4 projiziert werden.

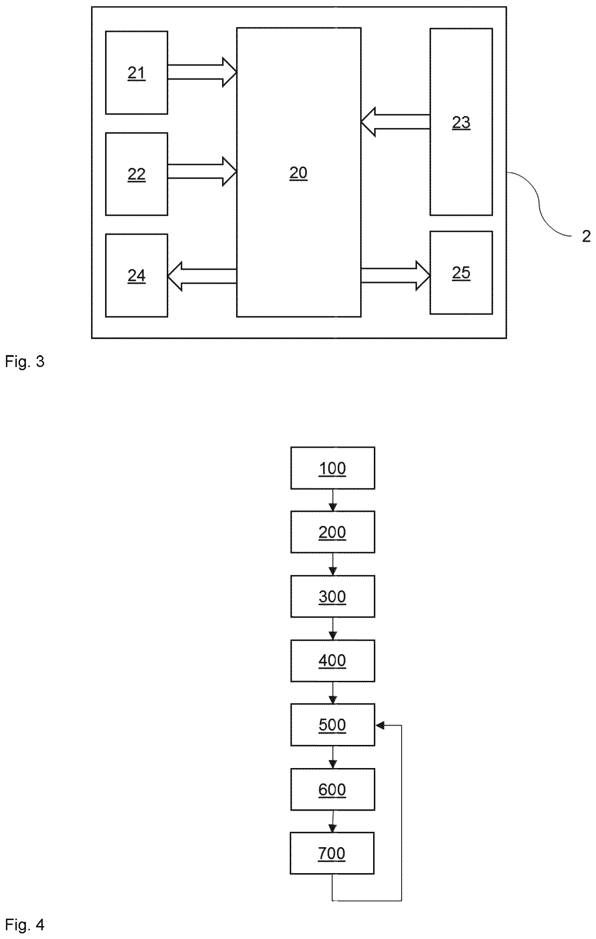

In der Figur 3 ist eine Simulationsumgebung 2 schematisch dargestellt, mit der eine Verkehrssimulation 20 bereitstellt wird. Als Eingangsdaten dienten der Verkehrssimulation 20 eine Anzahl von Verkehrsszenarien 23, die in einer Datenbank gespeichert sind und die zum Trainieren des Steuerungssystems 10 relevant sind. Ferner werden aktuelle Positionsdaten 21 des Kraftfahrzeuges 1 auf dem Gelände 4 sowie Kartendaten 22 als Eingangsparameter für die Verkehrssimulation 20 in einem Speicherabbild bereitgestellt. Mit dem Kartendaten 22 wird eine örtliche Umgebung eines real zu untersuchenden Einsatzgebietes beschrieben, die mit dem Kraftfahrzeug 1 auf dem Gelände 4 befahren werden kann. Das Gelände 4 kann ein geeignetes Prüfgelände oder eine kontrollierte öffentliche Umgebung sein, die durch die Kartendaten 22 beschrieben werden kann. Über die erste Funkverbindung 41 werden Positionsdaten 21 des Kraftfahrzeugs 1 empfangen. Mit den im Speicherabbild vorliegenden Positionsdaten 21 wird das Kraftfahrzeug 1 auf dem Gelände 4 in der auf eingespielten Kartendaten 22 basierenden Verkehrssimulation 20 zeitlich und örtlich positioniert widergespiegelt.

Basierend auf geeigneten Verkehrsszenarien 23 aus der Datenbank können Trainingsszenarien erzeugt werden, die kritische Missionen bzw. kritische Verkehrssituationen für das Kraftfahrzeug 1 darstellen und die das zu trainierende kamerabasierte Steuerungssystem 10 herausfordern. Durch die Verkehrssimulation 20 können virtuelle Objekte innerhalb eines Trainingsszenarios erzeugt werden. Für diese virtuellen Objekte können ferner virtuelle Objektdaten 24 bereitgestellt und mittels der zweiten Funkverbindung 42 an ein Projektionssystem 3 übermittelt werden. Somit kann ein Bild 36 eines jeweiligen virtuellen Objekts örtlich und zeitlich zum Gelände 4 positioniert in das Sichtfeld der Kamera 11 projiziert und somit aus der Simulation heraus in die reale Umgebung des Geländes 4 zurückgespiegelt werden.

Anhand geeigneter Metriken, die für eine jeweilige kritische Mission bzw. eine kritische Verkehrssituation bereitgestellt werden, kann eine Reaktion des zu trainierenden kamerabasierten Steuerungssystems 10 durch die Verkehrssimulation 20 bewertet werden. Entsprechende Metriken können zusammen mit den zugehörigen Verkehrsszenarien 23 in der Datenbank abgelegt sein oder durch die Verkehrssimulation 20 ermittelt werden. Die Verkehrssimulation 20 kann ein Bewertungsergebnis 25 ausgeben, dass mittels der ersten Funkverbindung 41 an das zu trainierende Steuerungssystems 10 im Kraftfahrzeug 1 übermittelt werden kann. Dadurch können Rückkopplungsschleifen zum Trainieren des Steuerungssystems 10 durchgeführt werden.

Nachfolgend wird ein Ablauf des erfindungsgemäßen Verfahrens zum Trainieren eines kamerabasierten Steuerungssystems 10 anhand der Figur 4 und einem Fahrerassistenzsystem zur Verkehrszeichenerkennung beispielhaft erläutert. In einem ersten Schritt 100 wird ein zur kamerabasierten Objekterkennung geeignetes KI-Framework ausgewählt und in das zu trainierende kamerabasierte Steuerungssystem 10 des Kraftfahrzeugs 1 eingebettet.

Eine Verkehrssimulation 20 wird auf der Simulationsumgebung 2 bereitgestellt. In einem zweiten Schritt 200 werden Kartendaten 22 eines real zu untersuchenden Einsatzgebietes eingespielt, die beispielhaft einen Streckenabschnitt einer Straße umfassen.

In einem dritten Schritt 300 wird ein Prüfgelände ausgewählt, auf dem eine Strecke gemäß dem Streckenverlauf des eingespielten Kartenmaterials mit dem Kraftfahrzeug 1 gefahren werden kann. Das Kraftfahrzeug 1 auf dem ausgewählten Prüfgelände wird über die erste Funkverbindung 41 mit der Verkehrssimulation 20 gekoppelt, so dass das Kraftfahrzeug 1 mit einer korrekten Lokalisierung auf dem Streckenabschnitt in dem eingespielten Kartenraum der Verkehrssimulation 20 in Echtzeit widergespiegelt wird.

In einem vierten Schritt 400 wird ein Projektionssystem 3 mit der Verkehrssimulation 20 gekoppelt, das zum Projizieren von Verkehrszeichen auf dem Prüfgelände geeignet ist, die als bildliche Darstellung von der Verkehrssimulation 20 bereitgestellt werden.

In einem fünften Schritt 500 wird ein am Straßenrand des Streckenabschnitts stehendes Verkehrszeichen als Mission für das Kraftfahrzeug 1 definiert, welche die Objekterkennung das kamerabasierte Steuerungssystems 10 herausfordern soll. Ferner wird als Metrik für diese Mission ein korrektes Erkennen des Verkehrszeichens definiert. Das Verkehrszeichen wird als stationäres virtuelles Objekt in der Verkehrssimulation 20 erzeugt. Sobald das auf dem Prüfgelände gefahrene Kraftfahrzeug 1 eine örtliche Position in Sichtweite der Ortsposition des simulierten virtuellen Verkehrszeichens erreicht, wird mit dem Projektionssystem 3 eine bildliche Darstellung des Verkehrszeichens unter Kompensation der EGO-Perspektive in das Sichtfeld der Kamera 11 Kraftfahrzeug 1 projiziert. Sobald das Steuerungssystem 10 ein am Straßenrand stehendes Verkehrszeichen erkannt hat, wird das erkannte Verkehrszeichen mittels der ersten Funkverbindung 41 an die Simulationsumgebung übermittelt.

In einem sechsten Schritt 600 bewertet die Verkehrssimulation 20 anhand seiner Metrik, ob das simulierte und in das Sichtfeld der Kamera 11 des Kraftfahrzeugs 1 projizierte Verkehrszeichen korrekt und zum richtigen Zeitpunkt durch die KI-basierte Objekterkennung des kamerabasierten Steuerungssystems 10 erkannt worden ist.

In einem siebten Schritt 700 wird ein über die erste Funkverbindung 41 empfangenes Bewertungsergebnis der Verkehrssimulation 20 vom kamerabasierten Steuerungssystem 10 im Kraftfahrzeug 1 zwecks bestärkendem Lernen verarbeitet.

Die Verfahrensschritte fünf bis sieben 500-700 können einer Vielzahl von Rückkopplungsschleifen durchlaufen, bis ein Trainingsziel erreicht ist.

Bei einer Projektion der bildlichen Darstellungen der simulierten virtuellen Objekte können auch unterschiedliche Sonnenstände, Helligkeitsstufen und Blendungseffekte berücksichtigt werden. Dadurch kann die Robustheit der Kl-basierten Objekterkennung in einem kamerabasierten Steuerungssystem 10 in entsprechend vielen Trainingsdurchgängen verbessert werden.

Parallel zum Trainieren einer eigentlichen Kl-basierten Objekterkennung können optional "Physical Hacking Angriffe" mit Hilfe der erfindungsgemäßen Projektionstechnik simuliert werden. Beispielsweise können Verkehrsschilder, die sich an absurden Plätzen befinden simuliert werden, die von einem trainierten kamerabasierten Steuerungssystem 10 zuverlässig als nicht valide klassifiziert werden sollten. Ferner können auf dem Gelände 4 nicht vorhandenen Angreifer-Objekte (wie Fußgänger, Autos, Steine, Bäume etc.), die sich nicht in der zu untersuchenden virtuellen Realität befinden simuliert werden. Auch sogenannte Adversariale-Angriffs-Muster (AdvMu), die die Bilderkennung zu falschen Schlüsseln etwa bei der Objektklassifikation verleiten, können in das Sichtfeld der Kamera 11 projiziert werden, so dass kamerabasierte Steuerungssysteme 10 mit eingebetteter Kl-basierten Objekterkennung auf eine Stabilität gegenüber solchen Angriffen trainiert werden können.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Liste der Bezugszeichen

- 1: Kraftfahrzeug
- 10: Steuerungssystem
- 11: Kamera
- 12: Kommunikationseinrichtung
- 2: Simulationsumgebung
- 20: Verkehrssimulation
- 21: Positionsdaten des Kraftfahrzeugs
- 22: Kartendaten
- 23: Verkehrsszenarien
- 24: virtuelle Objektdaten
- 25: Bewertungsergebnis
- 3: Projektionssystem
- 30: Projektionseinrichtung
- 31: Kameravorsatzoptik
- 32: Combiner
- 35: Videoprojektor
- 36: projiziertes Bild
- 4: Gelände
- 41: Funkverbindung
- 42: Funkverbindung
- 100: erster Schritt
- 200: zweiter Schritt
- 300: dritter Schritt
- 400: vierter Schritt
- 500: fünfter Schritt
- 600: sechster Schritt
- 700: siebter Schritt

## Patentansprüche

1. Verfahren zum Trainieren eines kamerabasierten Steuerungssystems (10) eines Kraftfahrzeugs (1), wobei das Steuerungssystem (10) einen Kl-Algorithmus umfasst, mit dem eine Bilderkennung zum Erkennen und Klassifizieren von Objekten im Sichtfeld der Kamera (10) bereitgestellt wird, und wobei das Kraftfahrzeug mit einer Verkehrssimulation (20) gekoppelt auf einem Gelände (4) gefahren wird, so dass das Kraftfahrzeug (1) in der Verkehrssimulation (20) zeitlich und örtlich positioniert widergespiegelt wird, wobei mittels der Verkehrssimulation (20) basierend auf einer jeweiligen widergespiegelten Position des Kraftfahrzeugs (1) Trainingsszenarien mit virtuellen Objekten erzeugt werden, so
dass für die simulierten virtuellen Objekte ferner jeweils eine bildliche Darstellung erzeugt wird, wobei die erzeugten bildlichen Darstellungen mittels wenigstens einem Projektionssystem (3) in ein Sichtfeld einer dem kamerabasierten Steuerungssystem (10) des Kraftfahrzeuges (1) zugeordneten Kamera (11) projiziert werden, so dass der Kamera (11) Bilder der virtuellen Objekte aus der Verkehrssimulation (20) zurückgeführt werden, und wobei eine Reaktion des Steuerungssystems (10) auf ein jeweiliges Trainingsszenario bewertet wird, und wobei ein Bewertungsergebnis (25) zum bestärkenden Lernen des KI-Algorithmus durch das Steuerungssystem (10) verarbeitet wird.

2. Verfahren gemäß dem vorstehenden Anspruch, wobei das Bewertungsergebnis (25) auf einer Metrik für ein jeweiliges Trainingsszenario beruht, die von der Verkehrssimulation (20) bereitgestellt wird, wobei eine Reaktion des Steuerungssystems auf ein jeweiliges Trainingsszenario durch die Verkehrssimulation bewertet und wobei das Bewertungsergebnis (25) an das Steuerungssystem übermittelt wird.

3. Verfahren gemäß einem der Ansprüche, wobei mit dem Kl-Algorithmus oder einem weiteren Kl-Algorithmus des Steuerungssystems (10) eine Fahrstrategie für das Kraftfahrzeug (1) bereitgestellt wird.

4. Verfahren gemäß einem der Ansprüche 1 bis 3, wobei die bildlichen Darstellungen der virtuellen Objekte mittels wenigstens einem Videoprojektor (35) auf wenigstens eine Projektionsfläche auf dem befahrenen Gelände (4) projiziert werden.

5. Verfahren gemäß einem der Ansprüche 1 bis 4, wobei die bildlichen Darstellungen der virtuellen Objekte mittels einer Projektionseinrichtung (30) auf einen Combiner (32) einer Kameravorsatzoptik (31) projiziert werden.

6. Trainingssystem zum Trainieren eines kamerabasierten Steuerungssystems (10) eines Kraftfahrzeugs (1), umfassend ein Kraftfahrzeug (1) mit einem zu trainierenden kamerabasierten Steuerungssystem (10) und mit einer zugeordneten Kamera (11), eine Simulationsumgebung (2) zum Bereitstellen einer Verkehrssimulation (20) sowie wenigstens ein Projektionssystem (3), wobei das Steuerungssystem (10) einen Kl-Algorithmus umfasst, der eine Bilderkennung zum Erkennen und Klassifizieren von Objekten im Sichtfeld der Kamera (10) bereitstellt, und wobei die Simulationsumgebung (20) mit dem zu trainierenden kamerabasierten Steuerungssystem (10) sowie mit dem Projektionssystem (3) zwecks Datenübermittlung in Verbindung steht, so dass eine zeitliche und örtliche Position des auf einem Gelände (4) gefahrenen Kraftfahrzeugs (1) in der Verkehrssimulation (20) widergespiegelt ist, so dass die Verkehrssimulation (20) ausgebildet ist, basierend auf einer jeweiligen widergespiegelten Position des Kraftfahrzeugs Trainingsszenarien mit virtuellen Objekten zu erzeugen und ferner für die simulierten virtuellen Objekte jeweils eine bildliche Darstellung zu erzeugen, wobei das wenigstens eine Projektionssystem (3) ausgebildet ist, die erzeugten bildlichen Darstellungen in ein Sichtfeld der Kamera (11) zu projizieren, so dass der Kamera (11) Bilder der virtuellen Objekte aus der Verkehrssimulation (20) zurückgeführt werden, und wobei das zu trainierende Steuerungssystem (10) ausgebildet ist, ein Bewertungsergebnis (25) zum bestärkenden Lernen des Kl-Algorithmus zu verarbeiten, das eine Reaktion des Steuerungssystems (10) auf ein jeweiliges Trainingsszenario bewertet.

7. Trainingssystem gemäß dem vorstehenden Anspruch 6, wobei die Verkehrssimulation (20) ausgebildet ist, die Reaktion des zu trainierenden Steuerungssystems (10) auf ein jeweiliges Trainingsszenario zu bewerten, wobei das Bewertungsergebnis (25) auf einer Metrik für ein jeweiliges Trainingsszenario beruht.

8. Trainingssystem gemäß einem der Ansprüche 6 oder 7, wobei der Kl-Algorithmus oder wobei ein weiteren Kl-Algorithmus des zu trainierenden Steuerungssystems (10) einen Fahrstrategiealgorithmus für das Kraftfahrzeug (1) umfasst.

9. Trainingssystem gemäß einem der Ansprüche 6 bis 8, wobei das Projektionssystem (3) einen Videoprojektor (35) umfasst, der ausgebildet ist, die bildlichen Darstellungen der virtuellen Objekte auf wenigstens eine Projektionsfläche auf einem befahrenen Gelände (4) zu projizieren.

10. Trainingssystem gemäß einem der Ansprüche 6 bis 9, wobei das Projektionssystem (3) eine Projektionseinrichtung (30) sowie eine Kameravorsatzoptik (31) mit einem Combiner (32) umfasst und dazu ausgebildet, die bildlichen Darstellungen der virtuellen Objekte auf den Combiner (32) zu projizieren, wobei die Kameravorsatzoptik (31) mit dem Combiner (32) vor der Kamera (11) des Kraftfahrzeugs (1) angeordnet ist.

11. Computerprogramm, das, wenn es auf einer Recheneinheit innerhalb eines zu trainierenden kamerabasierten Steuerungssystems (10) und/oder innerhalb einer Simulationsumgebung (2) für eine Verkehrssimulation (20) ausgeführt wird, die jeweilige Recheneinheit anleitet, ein Verfahren nach einem der Ansprüche 1 bis 5 auszuführen.

## Claims

1. Method for training a camera-based control system (10) of a motor vehicle (1), wherein the control system (10) comprises an Al algorithm with which an image recognition is provided for recognising and classifying objects in the field of view of the camera (10), and wherein the motor vehicle is driven on a terrain (4) coupled to a traffic simulation (20), so that the motor vehicle (1) is reflected in the traffic simulation (20) in a temporally and locally positioned manner, wherein training scenarios with virtual objects are generated by means of the traffic simulation (20) based on a respective reflected position of the motor vehicle (1), so that, in addition, a respective image representation is generated, by means of at least one projection system (3) The invention relates to a field of view of a camera (11) associated with the camera-based control system (10) of the motor vehicle (1), such that images of the virtual objects are fed back to the camera (11) from the traffic simulation (20). A reaction of the control system (10) to a respective training scenario is evaluated and an evaluation result (25) for enhancing the learning of the Al algorithm is processed by the control system (10).

2. A method according to the preceding claim, wherein the evaluation result (25) on a metric for a respective training scenario, which is provided by the traffic simulation (20) is based, wherein a reaction of the control system to a respective training scenario by means of the traffic simulation is evaluated and wherein the evaluation result (25) to the control system is transmitted.

3. Method according to one of the claims, wherein a driving strategy for the motor vehicle (1) is provided with the Al algorithm or a further Al algorithm of the control system (10).

4. Method according to any one of claims 1 to 3, wherein the visual representations of the virtual objects are projected by means of at least one video projector (35) onto at least one projection surface on the travelled terrain (4).

5. Method according to any one of claims 1 to 4, wherein the pictorial representations of the virtual objects are projected by means of a projection device (30) onto a combiner (32) of a camera attachment optics (31).

6. Training system for training a camera-based control system (10) of a motor vehicle (1), comprising a motor vehicle (1) with a camera-based control system (10) to be trained and with an associated camera (11), a simulation environment (2) for providing a traffic simulation (20) and at least one projection system (3), wherein the control system (10) comprises an Al algorithm which provides an image recognition for recognising and classifying objects in the field of view of the camera (10), and wherein the simulation environment (20) is connected to the camera-based control system (10) to be trained and to the projection system (3) for data transmission, so that a temporal and local position of the vehicle on a terrain (4) is Motor vehicle (1) in the traffic simulation (20) is reflected, so that the traffic simulation (20) is designed, based on a respective reflected position of the motor vehicle training scenarios with virtual objects to generate and, furthermore, for the simulated virtual objects in each case to generate a pictorial representation, wherein the at least one projection system (3) is designed, the generated pictorial representations in a field of view of the camera (11) to project, so that the camera (11) images of the virtual objects from the traffic simulation (20) are returned, and wherein the control system (10) to be trained is designed, an evaluation result (25) for reinforcing learning of the Al algorithm, which evaluates a reaction of the control system (10) to a respective training scenario.

7. Training system according to the preceding claim 6, wherein the traffic simulation (20) is designed to evaluate the reaction of the control system (10) to be trained to a respective training scenario, wherein the evaluation result (25) is based on a metric for a respective training scenario.

8. Training system according to any one of claims 6 or 7, wherein the Al algorithm or wherein a further Al algorithm of the control system to be trained (10) a driving strategy algorithm for the motor vehicle (1) comprises.

9. Training system according to one of claims 6 to 8, the projection system (3) comprising a video projector (35) which is designed to project the visual representations of the virtual objects onto at least one projection surface on a travelled terrain (4).

10. Training system according to one of claims 6 to 9, wherein the projection system (3) comprises a projection device (30) and a camera attachment optics (31) with a combiner (32) and is designed to project the visual representations of the virtual objects onto the combiner (32), wherein the camera attachment optics (31) with the combiner (32) is arranged in front of the camera (11) of the motor vehicle (1).

11. Computer programme which, when it is executed on a computing unit within a camera-based control system (10) to be trained and/or within a simulation environment (2) for a traffic simulation (20), instructs the respective computing unit to carry out a method according to one of claims 1 to 5.

## Revendications

1. Procédé d'entraînement d'un système de commande à caméra (10) d'un véhicule automobile (1), dans lequel le système de commande (10) comprend un algorithme d'IA avec lequel une reconnaissance d'image est fournie pour reconnaître et classer des objets dans le champ de vision de la caméra (10), et dans lequel le véhicule automobile est conduit sur un terrain (4) couplé à une simulation de trafic (20), de sorte que le véhicule automobile (1) est réfléchi dans la simulation de trafic (20) d'une manière temporelle et localement positionnée, dans lequel des scénarii d'entraînement avec des objets virtuels sont générés au moyen de la simulation de trafic (20) en fonction d'un poste réfléchi respectif du véhicule automobile (1). l'invention concerne un champ de vision d'une caméra (11) associée au système de commande à caméra (10) du véhicule à moteur (1), de sorte que des images des objets virtuels sont renvoyées à la caméra (11) à partir de la simulation de trafic (20). Une réaction du système de commande (10) à un scénario d'apprentissage respectif est évaluée et un résultat d'évaluation (25) destiné à améliorer l'apprentissage de l'algorithme d'IA est traité par le système de commande (10).

2. Procédé selon la revendication précédente, dans lequel le résultat d'évaluation (25) d'une métrique pour un scénario d'apprentissage respectif, qui est fourni par la simulation de trafic (20) est basé, dans lequel une réaction du système de commande à un scénario d'apprentissage respectif au moyen de la simulation de trafic est évaluée et dans lequel le résultat d'évaluation (25) au système de commande est transmis.

3. Procédé selon l'une des revendications précédentes, dans lequel on munit une stratégie de conduite du véhicule automobile (1) de l'algorithme AI ou d'un autre algorithme AI du système de commande (10).

4. Procédé selon l'une quelconque des revendications 1 à 3, dans lequel les représentations visuelles des objets virtuels sont projetées au moyen d'au moins un vidéoprojecteur (35) sur au moins une surface de projection sur le terrain parcouru (4).

5. Procédé selon l'une des revendications 1 à 4, **caractérisé en ce que** les représentations picturales des objets virtuels peuvent être projetés sur un combineur (32) d'un accessoire d'objectif de caméra (31) au moyen d'un dispositif de projection (30).

6. Système d'entraînement pour entraîner un système de commande à caméra (10) d'un véhicule automobile (1), comprenant un véhicule automobile (1) avec un système de commande à caméra (10) à entraîner et avec une caméra associée (11), un environnement de simulation (2) pour fournir une simulation de trafic (20) et au moins un système de projection (3), le système de commande (10) comprenant un algorithme d'IA qui fournit une reconnaissance d'image pour reconnaître et classer des objets dans le champ de vision de la caméra (10), et l'environnement de simulation (20) étant connecté au système de commande à caméra (10) à être et au système de projection (3) pour la transmission de données, de sorte qu'un poste temporel et local du véhicule sur un terrain (4) est un véhicule à moteur (1) dans la simulation de trafic (20) est réfléchi, de sorte que la simulation de trafic (20) est conçue, en fonction d'un poste réfléchi respectif des scénarios d'entraînement de véhicule à moteur avec des objets virtuels à générer et, en outre, pour que les objets virtuels simulés génèrent dans chaque cas une représentation picturale, le ou les systèmes de projection (3) étant conçus, les représentations picturales générées dans un champ de vision de la caméra (11) à projeter, de sorte que la caméra (11) images des objets virtuels la simulation de trafic (20) est renvoyée, et dans lequel le système de commande (10) à entraîner est conçu, un résultat d'évaluation (25) pour le meilleur apprentissage possible de l'algorithme AI, qui évalue une réaction du système de commande (10) à un scénario d'entraînement respectif.

7. Système d'entraînement selon la revendication 6 précédente, dans lequel la simulation de trafic (20) est conçue pour évaluer la réaction du système de commande (10) à entraîner à un scénario d'entraînement respectif, le résultat d'évaluation (25) étant basé sur une métrique pour un scénario d'entraînement respectif.

8. Système d'entraînement selon l'une quelconque des revendications 6 ou 7, dans lequel l'algorithme AI - ou dans lequel un autre algorithme AI - du système de commande à entraîner (10) comprend un algorithme de stratégie de conduite pour le véhicule automobile (1).Système d'entraînement selon l'une des revendications 6 à 8, le système de projection (3) comprenant un vidéoprojecteur (35) qui est destiné à projeter les représentations visuelles des objets virtuels sur au moins une surface de projection sur un terrain parcouru (4).

9. Système d'entraînement selon l'une des revendications 6 à 8, le système de projection (3) comprenant un projecteur vidéo-échographique (35) destiné à projeter les représentations visuelles des objets virtuels sur au moins une surface de projection sur un terrain parcouru (4).

10. Système d'entraînement selon l'une des revendications 6 à 9, dans lequel le système de projection (3) comprend un dispositif de projection (30) et une optique de fixation de caméra (31) avec un combineur (32) et est conçu pour projeter les représentations visuelles des objets virtuels sur le combineur (32), dans lequel l'optique de fixation de caméra (31) avec le combineur (32) est disposée devant la caméra (11) du véhicule automobile (1).

11. Programme informatique qui, lorsqu'il est exécuté sur une unité de calcul au sein d'un système de commande à caméra (10) à entraîner et/ou au sein d'un environnement de simulation (2) pour une simulation de traffic (20), commande à l'unité de calcul respective de mettre en œuvre un procédé selon l'une des revendications 1 à 5.
